# EUROPEAN PATENT SPECIFICATION

(11) **EP 2 634 400 B1**
(45) Date of publication and mention of the grant of the patent: **12.08.2015**
(21) Application number: 12157287.9
(22) Date of filing: 28.02.2012
(51) Int. Cl.: F02D 19/06, F02B 45/00

(54) **Operating a power plant with alternative fuels**
Betrieb eines Kraftwerks mit alternativen Brennstoffen
Fonctionnement d'une centrale électrique avec des combustibles alternatifs

(43) Date of publication of application: 04.09.2013
(73) Proprietor: Caterpillar Motoren GmbH & Co. KG, 24159 Kiel (DE)
(72) Inventor: von der Osten-Sack, Andreas, 24145 Kiel (DE); Reeh, Jens-Uwe, 24220 Flintbek (DE)
(74) Representative: Kramer Barske Schmidtchen Patentanwälte PartG mbB

(56) References cited:
- EP-A1- 2 211 041
- WO-A1-2007/104968
- WO-A1-2009/046713
- GB-A- 2 349 175
- US-A- 2 940 435
- US-A- 4 471 744

## Description

### Technical Field

The present disclosure generally refers to operating an internal combustion engine (ICE) with multiple fuels and particularly to operating the ICE with alternative fuels such as pyrolysis oil. Moreover, the present disclosure refers to switching an ICE back and forth between pyrolysis oil based fuel operation and crude oil based fuel operation.

### Background

Alternative fuels replacing crude oil based fuels are the subject of ongoing interest, in particular with respect to the replacement of crude oil based fuels such as diesel fuel, light fuel oil (LFO), and heavy fuel oil (HFO). Alternative fuels include first generation biofuels (e.g. palm oil, rapeseed oil, canola oil, oils based on animal fat) and second generation biofuels (e.g. oils made of non food corps, i.e. waste biomass).

Examples of second generation biofuel include "pyrolysis oils" obtained from the pyrolysis of, for example, wood or agricultural wastes, such as the stalks of wheat or corn, grass, wood, wood shavings, grapes, and sugar cane. In general, pyrolysis oil is predominantly produced by the "Fast pyrolysis" technology, which comprises rapid pyrolysation of biomass in a fluidized bubbling sand bed reactor, wherein the solid heat-carrying medium is circulated and, therefore, the residence time of solids is well-controlled and high heating rates (up to 1000 °C/second) are obtained.

The chemical composition and the physical properties of alternative fuels such as pyrolysis oil based fuels can differ significantly from those of crude oil based fuels such as diesel fuel, LFO, and HFO, in particular with respect to the high content of water and oxygen, and the acidic value. Moreover, as pyrolysis oils include polar hydrocarbons and large amounts of water, they are almost immiscible with crude oil based fuels, which consist mainly of saturated olefinic and aromatic hydrocarbons. Finally, the acidic value of pyrolysis oil based fuels results in strong corrosion acting on contacted metal parts in engine systems.

Accordingly, the use of alternative fuels may require an adaptation of ICEs to those specific features of alternative fuels. This may in particular be the case for large ICEs operated at medium speed. A proposal of self-ignition ICEs for operation with alternative fuels is disclosed in EP 2 634 389 A1, entitled "SELF IGNITION OPERATION OF ALTERNATIVE FUEL INTERNAL COMBUSTION ENGINES" and filed on the same day by Caterpillar Motoren GmbH & Co. KG.

Moreover, a pyrolysis oil operated ICE using an oxygen enriched atmosphere is disclosed in GB 2 349 175 A.

General configurations of fuel supply systems directed to the use of multiple types of fuels, such as Diesel fuel, heavy fuel, and vegetable oil, are disclosed, for example, in US 4,471,744 B, WO 2009/046713 A1, and EP 2 211 041 A1.

The present disclosure is directed, at least in part, to improving or overcoming one or more aspects of the related prior art and particularly to simplify the operation of a power plant operating ICEs with alternative fuels such as pyrolysis oil based fuels.

### Summary of the Disclosure

This object is achieved by a multi-fuel power plant of claim 1 and a method for operating a multi-fuel internal combustion engine of claim 8. Further developments of the invention are given in the dependent claims.

According to an aspect of the present disclosure, a multi-fuel power plant may comprise a tank system comprising an alternative fuel tank and at least one cleaning fuel tank, a fuel treatment system comprising an alternative fuel treatment unit fluidly connected to the at least one alternative fuel tank and a cleaning fuel treatment unit fluidly connected to the at least one cleaning fuel tank, a fuel conditioning unit fluidly connected to the alternative fuel treatment unit and the cleaning fuel treatment unit, an internal combustion engine for operation with the alternative fuel and the cleaning fuel, the internal combustion engine comprising an engine fuel system, a fuel recirculating unit for supplying the engine fuel system with fuel, the fuel recirculating unit comprising a circulation tank, which is fluidly connected to the fuel conditioning unit and the engine fuel system, and a control unit configured to control the fuel conditioning unit to condition the fuel selected for being provided to the engine fuel system and to providing the same to the circulation tank, thereby allowing switching between alternative fuel operation and cleaning fuel operation while continuously operating the internal combustion engine.

According to another aspect of the present disclosure, a method for operating a multi-fuel internal combustion engine configured for alternative fuel operation and cleaning fuel operation, the internal combustion engine comprising a fuel recirculation system with an engine fuel system may comprise providing a cleaning fuel that is chemically compatible to the alternative fuel and allows operation of the internal combustion engine, operating the internal combustion engine with the cleaning fuel such that the fuel recirculation system is filled essentially with the cleaning fuel, during continuous operation of the internal combustion engine, switching to operating the internal combustion engine with the alternative fuel by supplying the alternative fuel to the fuel recirculation system, thereby increasing the ratio of alternative fuel in the engine fuel system.

According to another aspect of the present disclosure, a method for switching between alternative fuel operation and crude oil based fuel operation of a multi-fuel internal combustion engine with an engine fuel system may comprise operating the internal combustion engine with a crude oil based fuel such that the fuel recirculation system is filled essentially with the crude oil based fuel, during continuous operation of the internal combustion engine, switching to operating the internal combustion engine with a switching fuel, which is chemically compatible to the crude oil based fuel as well as an alternative fuel and allows operation of the internal combustion engine, by supplying the cleaning fuel to the fuel recirculation system, thereby increasing the ratio of the switching fuel in the engine fuel system; and performing the method described above, whereby the switching fuel is provided as the cleaning fuel.

In some embodiments, the multi-fuel power plant may further comprise a valve unit at an exit of the engine fuel system, and a first switching unit comprising a first switch over tank fluidly connected to the valve unit and a first switching pump fluidly connected to the first switch over tank and at least one of the alternative fuel tank and the fuel conditioning unit, and wherein the control unit is further configured to control the valve unit during a switch over process between alternative fuel operation and cleaning fuel operation to release a fuel mixture comprising cleaning fuel and alternative fuel from the fuel recirculating unit to the first switch over tank.

Other features and aspects of this disclosure will be apparent from the following description and the accompanying drawings.

### Brief Description of the Drawings

Fig. 1 shows a schematic block diagram of a multi-fuel power plant; and
Fig. 2 is a flowchart illustrating the operation of the multi-fuel power plant with different types of fuels.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that the operation of ICEs with alternative fuels should not be affected by the specific features of the alternative fuel. For example, corrosive activity may be limited by temporally limiting the contact of a surface with a pyrolysis based fuel as much as possible. With respect to the incompatibility between crude oil based fuels and alternative fuels, the contact of those fuels may be avoided or reduced as far as possible because, when a pyrolysis oil based fuel is contacted with a mineral oilbased fuel, the mutual incompatibility may cause a precipitation phenomenon. The resulting precipitates may obstruct filters, valves, ducts, and pipes of the ICE and associated systems and, thus, may require extensive cleaning operation, accompanied by costly downtime of the ICE and the associated systems.

To provide a workable power plant using one or more ICEs operated inter alia with alternative fuels and nevertheless providing power efficiently, those adverse effects may be avoided or at least reduced when continuously operating the ICE in line with the herein proposed concept.

The ability to switching between fuels during continuous operation may allow starting an ICE with a cleaning fuel as the ICE may not be started with pyrolysis oil directly. Using the cleaning fuel, the ICE may be brought to a temperature needed for alternative fuel operation, for example, pyrolysis based fuel operation.

Alternatively, the ICE may be started with a crude oil based fuel and brought to temperature. Then, using an intermediary switch over fuel, one may switch to alternative fuel operation, for example, pyrolysis based fuel operation. Such a switch over process may apply the cleaning fuel as a switch over fuel, thereby at least largely avoiding any mixing of crude oil based fuel and, for example, pyrolysis oil based fuel and a polymerization effect and precipitation phenomenon caused by such a mixing, which may block valves, injectors, equipments, and piping of the engine system.

The switch over process may further allow increasing the temperature level of the ICE during a heating phase to a temperature needed for pyrolysis oil based fuel operation.

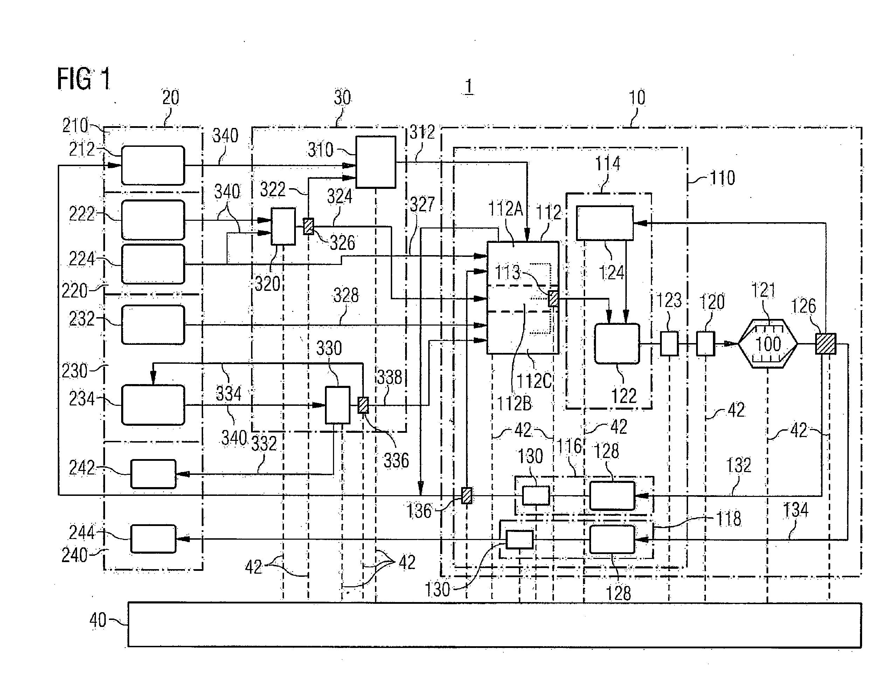

Referring to Fig. 1, a power plant 1 may include a power house 10, a tank farm 20, and a fuel treatment building 30.

Power house 10 may include one or more ICEs 100 and, for,one or more ICEs 100, a conditioning/circulating system 110 including a conditioning unit 112, a fuel recirculating unit 114, and a first switching unit 116 and a second switching unit 118. Conditioning unit 112 may comprise alternative fuel conditioning sections 112A, cleaning fuel conditioning section 112B, and crude oil based fuel condition section 112C for the different types of fuel that may need conditioning prior being supplied to ICE 100.

Tank farm 20 may include various tank sections. For example, tank farm 20 may include an alternative fuel tank section 210 for tanks for alternative fuels such as a pyrolysis oil based fuel tank 212.

Tank farm 20 may further include a cleaning fuel tank section 220 for tanks for the cleaning fuels or components for the cleaning fuel , here a castor oil tank 222 and an ethanol tank 224 for a switching fuel.

Tank farm 20 may further include a crude oil based fuel tank section 230 for tanks for crude oil based fuels such as, for example, a Diesel fuel tank 232 and an HFO tank 234.

In addition, tank farm 20 may include a waste tank section 240 including an HFO waste tank 242 for receiving waste of the HFO treatment process explained below and a Diesel fuel/cleaning fuel waste tank 244 for receiving waste fuel generated during the switching between Diesel fuel operation and cleaning fuel operation.

With respect to cleaning fuel section 220, tanks for various components of the cleaning fuel may be provided. The cleaning fuel is an ethanol-based fuel that includes besides ethanol additional components, here a bio-oil such as castor oil and optionally some additives.

For example, an ethanol-based fuel may consist of, based on the total volume of ethanol and castor oil, 20 to 90 % by volume ethanol and 80 to 10 % by volume castor oil (in particular 40 to 90 % by volume ethanol and 60 to 10 % by volume castor oil), and optionally including one or more additives in a total amount of up to 3 wt.-% of the total weight of the ethanol and castor oil.

The ethanol may be from biological sources. The term "ethanol" as used herein and in the appended claims comprises both absolute ethanol (i.e. ethanol containing less than 2 % by volume (for example, less than 0,5 % by volume) water) and ethanol containing considerable amounts of water.

As a bio-oil, castor oil is used in the present ethanol-based fuel. Castor oil is a vegetable oil obtained from castor seed of the castor plant *Ricinus communis.* Ricinoleic acid, which is the main fatty acid chain of castor oil (85 to 95 wt.-%), has a hydroxyl group at C₁₂, which provides the fatty acid chain with polar properties, promoting solubility in polar liquids like ethanol. At the same time, the remaining non-polar hydrocarbon chain of ricinoleic acid still provides sufficient non-polar character such that castor oil is miscible with non-polar liquids, like, for example, crude oil based fuels such as diesel fuel, LFO or HFO.

The ethanol content may be 40 to 80 % by volume (e.g. 45 to 65 % by volume or 45 to 55 % by volume or 48 to 52 % by volume) and the castor oil content is 60 to 20 % by volume (e.g. 55 to 35 % by volume or 55 to 45 % by volume or 52 to 48 % by volume). For economical reasons, the ethanol content of the ethanol-based fuel may be as high as possible, for example, 60 to 90 % by volume, or 70 to 90 % by volume, or 80 to 90 % by volume or 85 to 90 % by volume, in case the ethanol-based fuel is to be used for continuous (long-time) operation of an ICE, in particular a self-ignition ICE.

The ethanol-based fuel may optionally include one or more additives, for example, in a total amount of up to 3 wt.-% of the total weight of the ethanol and castor oil, preferably in a total amount of up to 2 wt.-%, in particular in a total amount of up to 1 wt.-% of the total weight of the ethanol and castor oil. Said additives may be selected from the group of additives consisting of thermal stabilizers, aging stabilizers, antioxidants, coloring agents, dyes, rust inhibitors, inhibitors of gum formation, metal deactivators, upper cylinder lubricants, friction modifiers, detergents, bacteriostatic agents, fungicides, microbiocides, and mixtures thereof.

The additives optionally included in the ethanol-based fuel may serve to improve one or more properties of the ethanol-based fuel, if considered to be necessary in view of the used engine type or any other circumstances, which require the use of additives. However, in view of environmental concerns (increased emissions), the ethanol-based fuel may be provided devoid of any additives.

Further details of an ethanol based fuel are disclosed, for example, in the application "ETHANOL-BASED FUEL AND USE THEREOF" filed on the same day by Caterpillar Motoren GmbH & Co. KG.

Multi-fuel power plant 1 may be operated only with the cleaning fuel and an alternative fuel. In that case, the configuration shown in Fig. 1 would simplify accordingly. Specifically, crude oil based fuel tank section 230 may not need to be provided and also treatment building 30 and conditioning/circulating system 110 may be simplified accordingly, as will be apparent to the person skilled in the art.

Treatment building 30 may include one or more treatment units for the various fuels. For example, treatment building 30 may include an alternative fuel treatment unit 310 for alternative fuels that may be fluidly connected to pyrolysis oil based fuel tank 212. In the case of a pyrolysis oil based fuel, alternative fuel treatment unit 310 may include a centrifuge for extracting small size particles. Via an alternative fuel pipe 312, alternative fuel treatment unit 310 may be fluidly connected to alternative fuel conditioning section 112A of conditioning unit 112.

Treatment building 30 further includes cleaning fuel treatment unit 320 fluidly connected to tanks for the cleaning fuel or its components. As shown in Fig. 1, castor oil tank 222 and ethanol tank 224 are each fluidly connected to cleaning fuel treatment unit 320. In cleaning fuel treatment unit 320, the ethanol and the castor oil are mixed together and filtered. In some embodiments, caster oil tank 222 and ethanol tank 224 may be combined in the required ratio before being supplied as cleaning fuel to cleaning fuel treatment unit 320, where then only filtering may take place.

In some embodiments, the cleaning fuel may be provided to alternative fuel treatment unit 310 via a flushing connection 322, which may be fluidly connected to a pipe system within alternative fuel treatment unit 310 carrying the cleaning fuel or the ethanol only. For illustrative purposes, flushing connection 322 is shown in Fig. 1 to be connected to a cleaning fuel pipe 324 via a cleaning fuel valve 326.

Cleaning fuel pipe 324 may fluidly connect alternative fuel treatment unit 310 with conditioning unit 112, for example, with cleaning fuel conditioning section 112B of conditioning unit 112.

In some embodiments, ethanol tank 224 may be additionally fluidly connected to alternative fuel conditioning section 112A of conditioning unit 112 via a by-pass fuel pipe 327.

In some embodiments, Diesel fuel tank 232 may be fluidly connected to crude oil based fuel conditioning section 112C of conditioning unit 112 via Diesel fuel pipe 328 with or without passing any treatment unit.

Treatment building 30 may further include a HFO treatment unit 330 fluidly connected to HFO tank 234 for cleaning the HFO, for example, via a centrifuge based system. Waste from the cleaning process may be supplied to HFO waste tank via HFO waste line 332. In addition, filtered HFO fuel may be returned to HFO tank 234 via HFO return line 334 in case more HFO is cleaned than be needed for operating ICE 100. A HFO valve 336 may be used to control the amount of HFO returned to HFO tank 234 and the amount of HFO provided to crude oil based fuel conditioning section 112C of conditioning unit 112 via HFO line 338.

In general, fuel connection lines 340 between the tanks of tank farm 20 and the respective treatment units may include pumps, control valves, pressure sensors, and/or temperature sensors (not shown). Moreover, the tanks and the treatment units may be fluidly connected to more than one condition unit 112. As an example, Fig. 1 illustrates only a single conditioning unit 112 and a single ICE 100.

For the selection of what type of fuel from which section of conditioning unit 112 may be provided to ICE 100, conditioning unit 112 comprises a fuel selection valve 113 fluidly connected to each of alternative fuel conditioning section 112A, cleaning fuel conditioning section 112B, and crude oil based fuel condition section 112C as well as fuel recirculating unit 114.

Conditioning unit 112 may be configured to bring the various fuels to the needed temperature to ensure the required viscosity of the fuel when provided to ICE 100. A viscosity sensor 120 may be provided prior ICE 100 as well as various temperature sensors (not shown) may be provided within the power house 10. These components may be used, for example, to control a heat exchanger 123 arranged upstream of viscosity sensor 120.

Fuel recirculating unit 114 of conditioning/circulating system 110 is configured for supplying an engine fuel system 121 of ICE 100 with fuel. Fuel recirculating unit 114 may comprise a circulation tank 122 and a fuel cooling unit 124. Circulation tank 122 is fluidly connected with fuel conditioning unit 112 and via viscosity sensor 120 with engine fuel system 121.

Circulation tank 122 may be refilled with the respective fuel from conditioning unit 112 to compensate for the fuel combusted by ICE 100. During stable operation with one type of fuel, unused fuel may be returned to circulation tank 122. Depending on the type of fuel, the returned unused fuel may be cooled by fuel cooling unit 124, if required. Accordingly, a fuel recirculating cycle may comprise, starting at viscosity sensor 120, engine fuel system 121, circulation fuel cooling unit 124, tank 122, and heat exchanger 123.

A valve unit 126 may be provided in the fuel recirculating cycle to allow releasing unused fuel from the fuel recirculating cycle and stopping any backflow of unused fuel to circulation tank 122. Accordingly, circulation tank will be refilled essentially only by conditioning unit 112. Thus, in case of changing the type of fuel, releasing the fuel via valve unit 126 may accelerate emptying the fuel recirculating cylce with the earlier provided fuel. Partly or completely closing valve unit 126 may then allow cleaning the fuel recirculating cycle, in particular, the components of fuel recirculating unit 114 from the previously provided fuel as will be explained below.

As shown in Fig. 1, valve unit 126 may optionally be connected to first switching unit 116 and/or second switching unit 118 to allow faster switching between fuel types.

As pointed out above, multi-fuel power plant 1 may be operated only with the cleaning fuel and an alternative fuel. Then, second switching unit 118 may not be provided and tank farm 20 may not include crude oil based fuel section 230, treatment building may not include HFO treatment unit 330, and condition unit 112 may not include crude oil based fuel conditioning section 112C.

Each of first switching unit 116 and second switching unit 118 may include a switch over tank 128 and a switch over pump 130, wherein switch over tanks 128 may be fluidly connected to outlets of valve unit 126 via separate switch over lines 132 and 134.

Providing two separate switch over lines 132, 134 allows providing separate fuel systems for a pyrolysis oil/cleaning fuel mixture as well as crude oil based fuel/ cleaning fuel mixture, e.g. a Diesel fuel/ cleaning fuel mixture.

For example, a pyrolysis oil/cleaning fuel mixture may be returned to pyrolysis oil based fuel tank 212 via first switch over unit 116 and a Diesel fuel/ cleaning fuel mixture may be directed to Diesel fuel/cleaning fuel waste tank 244 via second switch over unit 118. Diesel fuel/cleaning fuel waste tank 244 may be connected to additional combustion units for further reuse.

Moreover, an outlet of first switching unit 116 may be fluidly connected to alternative fuel conditioning sections 112A to be reused during a switching process, for example, controlled via a reuse valve 136.

The operation of multi-fuel power plant 1 may be controlled by a control system. Specifically, the control system may be configured to control operation of ICE 100 based on a required mechanical output. The control system may further control the operation with the various types of fuels as well as the switching between the various types of fuels with a continuously operated engine.

The control system may include a control unit 40 and one or more control sensors such as temperature sensors (not shown), pressure sensors (not shown), and fluid viscosity sensors, for example, viscosity sensor 120. The control sensors may be configured to measure, for example, the temperature and the pressure of the charge air and the exhaust gas at the various pressure stages as well as the temperature, viscosity, and/or pressure of the fuel in treatment building 30, conditioning/circulating system 110, engine fuel system 121, and an injection system of ICE 100 and provide those data to control unit 40.

Control unit 40 may be a single microprocessor or plural microprocessors that may include means for controlling, among others, an operation of the various components of power plant system 1, for example, valve unit 126, cleaning fuel valve 326, HFO valve 336, fuel selection valve 113, and heat exchanger 123. Control unit 40 may be a general engine control unit (ECU) capable of controlling numeral functions associated with power plant system 1 and/or its associated components such as ICE 100. Control unit 40 may include all the components required to run an application such as, for example, a memory, a secondary storage device, and a processor such as a central processing unit or any other means known in the art for controlling power plant system 1 and its various components.

Various other known circuits may be associated with control unit 40, including power supply circuitry, signal-conditioning circuitry, communication circuitry, and other appropriate circuitry. Control unit 40 may analyze and compare received and stored data, and, based on instructions and data stored in memory or input by a user, determine whether action is required. For example, control unit 40 may compare received values with target values stored in memory, and based on the results of the comparison, control unit 40 may transmit signals to one or more components to alter the operation status thereof.

Control unit 40 may include any memory device known in the art for storing data relating to operation of the combustion engine and its components. The data may be stored in the form of one or more maps that describe and/or relate, for example, injection timing. Each of the maps may be in the form of tables, graphs, and/or equations, and include a compilation of data collected from lab and/or field operation of the combustion engine. The maps may be generated by performing instrumented tests on the operation of the combustion engine under various operating conditions while varying parameters associated therewith. The controller may reference these maps and control operation of one component in response to the desired operation of another component.

Specifically, control unit 40 may be configured to receive inputs from the various control sensors. Using the inputs from the control sensors, control unit 40 may be configured to control - via control connections lines 42 (indicated as dotted lines in Fig. 1) - the operation of ICE 100, conditioning unit 112, viscosity sensor 120, fuel cooling unit 124, valve unit 126, switch over pumps 130, reuse valve 136, alternative fuel treatment unit 310, cleaning fuel treatment unit 320, cleaning fuel valve 326, HFO treatment unit 330, HFO valve 336, fuel selection valve 113, and heat exchanger 123.

In some embodiments, a multi-fuel power system may comprise a tank farm comprising at least one crude oil based fuel tank and at least one alternative fuel tank, a fuel treatment system comprising a crude oil based fuel treatment plant fluidly connected to the at least one crude oil based fuel tank and an alternative fuel treatment plant fluidly connected to the at least one alternative fuel tank; and at least one engine unit comprising an internal combustion engine and a fuel control module, the fuel control module comprising a fuel conditioning unit fluidly connected to the crude oil based fuel treatment plant and the alternative fuel treatment plant, a fuel recirculating system with a circulating tank, which is fluidly connected to the fuel conditioning unit and the internal combustion engine, and a fuel cooling unit, which is fluidly connected to the internal combustion engine via a valve unit and the circulating tank for providing a fuel engine cycle, a first switching unit comprising a first switch over tank fluidly connected to the valve unit and a first switching pump fluidly connected to the first switch over tank and at least one of the alternative fuel tank and the fuel conditioning unit, a second switching unit comprising a second switch over tank fluidly connected to the valve unit and a second switching pump fluidly connected to the second switch and a waste fuel tank. The engine may be configured to operate in a self-igniting mode for crude oil based fuel and alternative fuel. The tank farm may comprise a switch over fuel tank that is fluidly connected to the alternative fuel treatment plant. The crude oil based fuel treatment plant, the alternative fuel treatment plant, and the conditioning unit may be configured to heat the respective fuel to its required temperature, thereby providing the required viscosity. The multi-fuel power system may further comprise a viscosity sensor provided in the fluid connection between the circulating tank and the internal combustion engine; and a control unit configured to receive viscosity data of the fluid and to control the heating of at least one of the crude oil based fuel treatment plant, the alternative fuel treatment plant, and the conditioning unit.

### Industrial Applicability

An exemplary switch over process from HFO operation to pyrolysis oil operation may include the following steps that may be performed while the ICE 100 may be continuously operated.

### Operating ICE 100 with HFO (step 400):

Crude oil based fuel treatment unit 330 and conditioning unit section 112C may be configured to ensure the required viscosity of 6-20 cSt by heating the HFO to 150-160 °C. Any unburned HFO is kept within the fuel recirculating cycle. Circulation tank 122 may thus be refilled with HFO only.

### Switching to operating ICE 100 with Diesel fuel (step 410):

Conditioning unit section 112C may be provided with Diesel fuel from Diesel fuel tank 232. Accordingly, circulation tank 122 may be refilled with Diesel fuel only and the fuel recirculating cycle continuously may be changed to a pure Diesel fuel operation. Thereby, the temperature of common components within conditioning unit 112 as well as the components of fuel recirculating cycle may be reduced. Conditioning unit may ensure the required viscosity of 2-4 cSt by providing the Diesel fuel at, for example, 18-20 °C. Diesel fuel may in general be provided in a temperature range between 10 °C to 70 °C.

### Operating ICE 100 with Diesel fuel only (step 420):

Conditioning unit 112C may ensure the required viscosity. Any unburned Diesel fuel may be kept within the fuel recirculating cycle and may be cooled with fuel cooling unit 124. Circulation tank may be refilled with Diesel fuel only.

### Switching to operating ICE 100 with the cleaning fuel (step 430):

Conditioning unit section 112B may be provided with cleaning fuel from cleaning fuel tanks or from cleaning fuel being composed in cleaning fuel treatment unit 320. Circulation tank 122 may be refilled with cleaning fuel only. Cleaning fuel treatment unit 320 and conditioning unit 112B may ensure the required viscosity of the cleaning fuel. Initially, the fuel recirculating cycle may be opened via valve unit 126 and any unburned fuel mixture of Diesel fuel and cleaning may be accumulated within DFO/switch over fuel waste tank 244 using second switch over unit 118. Then, valve unit 126 may close the fuel recirculating cycle such that all of its components may be cleaned from crude oil based fuel remaining by the cleaning fuel such that the fuel recirculating cycle may become essentially free of crude oil based fuel remains. During the cleaning process, valve unit 126 may reconnect Diesel fuel/cleaning fuel waste tank 244 at least partly the outlet of engine fuel system 121 or for limited periods of time to speed up the cleaning process.

### Operating ICE 100 with cleaning fuel only (step 440):

Cleaning fuel treatment unit 320 and conditioning unit 112B may ensure the required viscosity of 8-20 cSt by providing the cleaning fuel at a temperature within the range of 18-62 °C. Any unburned cleaning fuel may be kept within the fuel recirculating cycle and may be cooled with fuel cooling unit 124, if required. Circulation tank 112 may be refilled with cleaning fuel only.

### Switching to operating ICE 100 with a pyrolysis oil based fuel (step 450):

Alternative fuel conditioning section 112A may be provided with pyrolysis based fuel from alternative fuel tank 212 via alternative fuel treatment unit 310. Circulation tank 112 may be refilled with pyrolysis oil based fuel. Alternative fuel treatment unit 310 and conditioning unit section 112A may ensure the required viscosity of the pyrolysis oil based fuel. Initially, the fuel recirculating cycle may be opened via valve unit 126 and any unburned fuel mixture of alternative fuel and cleaning may be accumulated within switching tank 128 of first switch over unit 116 and then be returned to conditioning unit section 112A and/or alternative fuel tank 212. Valve unit 126 may close the fuel recirculating cycle such that the alternative fuel/cleaning fuel mixture may be recirculated until - due to the refilling by the alternative fuel only - the fuel recirculating cycle essentially contains only alternative fuel.

### Operating ICE 100 with pyrolysis oil based fuel only (step 460):

Alternative fuel treatment unit 310 and conditioning unit section 112A may ensure the required viscosity of, for example, 12-28 cSt by providing the alternative fuel at a temperature within the range of 62-65 °C. Any unburned pyrolysis oil may be kept within the recirculation unit and may be cooled with fuel cooling unit 124, if required. Circulation tank 122 may be refilled with the pyrolysis oil based fuel only.

Switching back to operating ICE 100 with cleaning fuel (step 470):

It may be switched to refill circulation tank 122 with cleaning fuel. Initially, fuel recirculating cycle may be decoupled via valve unit 126 and the unburned fuel mixture of pyrolysis oil based fuel and cleaning fuel may be returned to conditioning unit section 112 (not indicated in Fig. 1) or alternative fuel tank 212 using first switch over unit 116. Then, valve unit 126 may close fuel recirculating cycle that is refilled with cleaning fuel only such that all components of the fuel recirculating cycle may be cleaned until the fuel recirculating cycle may be essentially free of any pyrolysis oil. During the cleaning process, valve unit 126 may at least be partly reconnected to pyrolysis oil tank 212 (for example, after reconnecting fuel cooling unit 124) to speed up the cleaning process.

Operating ICE 100 with cleaning fuel only (step 480) may correspond essentially to step 440 summarized above.

### Switching back to operating ICE 100 with crude oil based fuel (step 490):

Conditioning unit section 112C may be provided with a crude oil based fuel such as Diesel fuel from crude oil based tank section 230. Circulation tank 122 may be refilled with the crude oil based fuel only. Crude oil based fuel treatment units and conditioning unit 112C may ensure the required viscosity of the crude oil based fuel. Valve unit 126 may be maintained closed such that fuel mixture may be maintained in the fuel recirculating cycle and used to operate the engine. In view of the refilling with crude oil based fuel only, the part of cleaning fuel may continuously decrease. Alternatively, the fuel recirculating cycle may be opened via valve unit 126 and any unburned fuel mixture of crude oil based fuel and cleaning fuel may be accumulated within Diesel fuel/switch over fuel waste tank 244 via second switch over unit 118.

Operating ICE 100 with crude oil based fuel only (step 500) may be based essentially on steps 400 to 420 as summarized above.

During the various steps, control unit 40 may control the operation parameters of the multi-fuel power plant 100 such as fuel viscosity, fuel temperature, fuel pressure, and fuel injection timing by controlling the various components of the multi-fuel power plant 100 in accordance with the various operating conditions associated with the respective fuels.

The switching time of step 430 and step 450 may be optimized, for example, by reducing the time period during which ICE 100 may be operated with cleaning fuel only. Additionally, the switching time may be influenced by how much one either burns any unused fuel mixture (fuel recirculating cycle closed) or provides those fuel mixtures directly to the switching tanks 128 (fuel recirculating cycle opened).

Step 400 to step 500 illustrated above relate to a switching process between crude oil based fuel operation and alternative fuel operation wherein crude oil based fuel operation may be used to start the multi-fuel power plant. In that case, the cleaning fuel may be used to clean the fuel recirculating cycle in-between crude oil based fuel operation and alternative fuel operation such that any contact of alternative fuel and crude oil based fuel may be avoided or at least be reduced to an acceptable degree. For such a switching process, one may refer to the cleaning fuel as a switch over fuel.

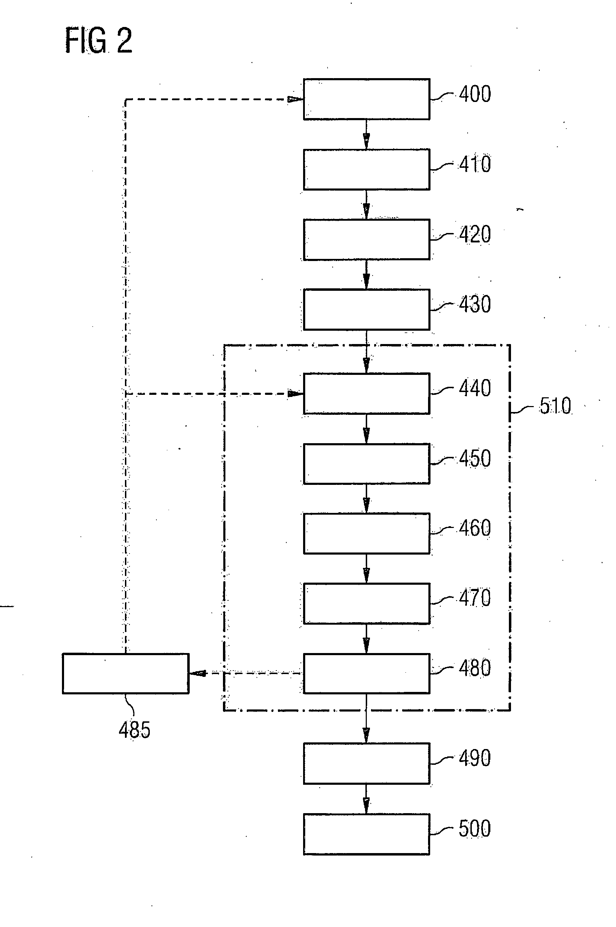

Besides the switching between the fuels, the sequence disclosed above or some parts of it may be applied when turning ICE 100 off and on. For example, following step 480, ICE 100 may be stopped (step 485). Restarting ICE 100 may then be performed at step 400 or at step 440, for example. In Fig. 2, the stop and start up process is indicated by dotted lines. Thus, the configurations and methods disclosed herein may allow a simple stopping and start up procedure of a power plant for alternative fuels.

In some embodiments, the cleaning fuel may be used to start the multi-fuel power plant, for example, to perform the warm up process of ICE 100. In that case, there may be no switching between crude oil based fuel operation and alternative fuel operation. Accordingly, an exemplary operation of multi-fuel power plant 100 may be based on step 440 to step 480 only (indicated by a dashed box 510 in Fig. 2) whereby those steps may be performed while the ICE 100 may be continuously operated. An exemplary multi-fuel power plant for cleaning fuel / alternative fuel operation may not include those components shown in Fig. 1 that relate to crude oil based fuel operation, for example, switch over unit 118, switch over line 134, crude oil based tank section 230, HFO treatment plant 330.

In some embodiments, a method for switching between alternative fuel operation and crude oil based fuel operation of a multi-fuel internal combustion engine may comprise supplying the crude oil based fuel to a recirculation system of an ICE and recirculating uninjected crude oil based fuel within the recirculation system, switching to operating the ICE with a switch over fuel by supplying the switch over fuel to the recirculation system, operating the ICE with the switch over fuel until the recirculation system comprises essentially only the switch over fuel, and switching to operating the ICE with the alternative fuel by supplying the alternative fuel to the recirculation system, thereby recirculating uninjected alternative fuel within the recirculation system.

In some embodiments, the method may further comprise opening the recirculation system when operating the ICE with the switch over fuel, and releasing an uninjected fuel mixture of crude oil based fuel and switch over fuel into a crude oil based fuel/switch over fuel tank, until the crude oil based fuel has reached a predetermined portion in the uninjected fuel mixture of crude oil based fuel and switch over fuel.

In some embodiments, the method may further comprise closing the recirculation system, recirculating uninjected fuel mixture through the recirculation system; and reducing the crude oil based fuel portion from the uninjected fuel mixture by supplying only switch over fuel.

In some embodiments, the method may further comprise, when recirculating uninjected switch over fuel, reopening the recirculation system at least partly, thereby accelerating the removing of the crude oil based fuel from the recirculation system.

In some embodiments, the method may further comprise opening the recirculation system when operating the engine with the alternative fuel, and releasing an uninjected fuel mixture of switch over fuel and alternative fuel into a alternative fuel/switch over fuel tank until the switch over fuel reached a predetermined portion within the uninjected fuel mixture of the switch over fuel and the alternative fuel.

In some embodiments, the method may further comprise closing the recirculation system, recirculating uninjected fuel mixture through the recirculation system, and reducing the switch over fuel portion from the uninjected fuel mixture by supplying only alternative fuel.

In some embodiments, the method may further comprise, when recirculating uninjected switch over fuel, reopening the recirculation system at least partly, thereby accelerating the removing of the crude oil based fuel from the recirculation system.

In some embodiments, the method may further comprise, when operating the internal combustion engine with the switch over fuel, changing the fuel temperature to a temperature close to the successively supplied fuel.

In some embodiments, the method may further comprise switching back to operating the engine with switching fuel SF.

In some embodiments, the method may further comprise, wherein the switch over fuel may be chemical inactive with the alternative fuel and the crude oil based fuel

Herein, the term "internal combustion engine/ICE" may refer to internal combustion engines which may be used as main or auxiliary engines of stationary power providing systems such as power plants for production of heat and/or electricity as well as in ships/vessels such as cruiser liners, cargo ships, container ships, and tankers.

In addition, the term "internal combustion engine/ICE" as used herein is not specifically restricted and may comprises any engine, in which the combustion of a fuel occurs with an oxidizer to produce high temperature and pressure gases, which are directly applied to a movable component of ICE, such as pistons or turbine blades, and move it over a distance thereby generating mechanical energy. Thus, as used herein, the term "internal combustion engine" comprises piston engines and turbines, which can, for example, be operated with alternative fuels such as pyrolysis oil. The ICE may be self-ignition based engines.

The herein disclosed procedure may simplify pyrolysis oil applications and may be used, for example, in Caterpillar engine applications. Examples of such engines that are suitable for adaptation to alternative fuels include medium speed internal combustion diesel engines, like inline and V-type engines of the series M20, M25, M32, M43 manufactured by Caterpillar Motoren GmbH & Co. KG, Kiel, Germany, operated in a range of 500 to 1000 rpm.

Although the preferred embodiments of this invention have,been described herein, improvements and modifications may be incorporated without departing from the scope of the following claims.

## Claims

1. A multi-fuel power plant (1) comprising:
a tank system (20) comprising an alternative fuel tank (212), a castor oil tank (222), and an ethanol tank (224);
a fuel treatment system (30) comprising an alternative fuel treatment unit (310) fluidly connected to the at least one alternative fuel tank (212) and configured to treat the alternative fuel and a cleaning fuel treatment unit (320) fluidly connected to the castor oil tank (222) and the ethanol tank (224) and configured to generate a cleaning fuel by mixing the components castor oil and ethanol of the same;
a fuel conditioning unit (112) fluidly connected to the alternative fuel treatment unit (310) and the cleaning fuel treatment unit (320) and comprising a fuel selection valve (113) for selecting what type of fuel from which section of the fuel conditioning unit (112) is provided for combustion;
an internal combustion engine (100) for operation with the alternative fuel and the cleaning fuel, the internal combustion engine (100) comprising an engine fuel system (121);
a fuel recirculating unit (114) configured to receive fuel from the fuel selection valve (113) of the fuel conditioning unit (112) and to supply the engine fuel system (121) with fuel, the fuel recirculating unit (114) comprising a circulation tank (122), which is fluidly connected to the fuel conditioning unit (112) and the engine fuel system (121); and
a control unit (40) configured to control the fuel conditioning unit (112) to condition the fuel selected for being provided to the engine fuel system (121) and to provide the same to the circulation tank (122), thereby allowing switching between alternative fuel operation and cleaning fuel operation while continuously operating the internal combustion engine (100).

2. The multi-fuel power plant (1) of claim 1, further comprising
a valve unit (126) at an exit of the engine fuel system (121); and
a first switching unit (116) comprising a first switch over tank (128) fluidly connected to the valve unit (126) and a first switching pump (130) fluidly connected to the first switch over tank (128) and at least one of the alternative fuel tank (212) and the fuel conditioning unit (112), and
wherein the control unit (40) is further configured to control the valve unit (126) during a switch over process between alternative fuel operation and cleaning fuel operation to release a fuel mixture comprising cleaning fuel and alternative fuel from a fuel recirculating cycle to the first switch over tank (128).

3. The multi-fuel power plant (1) of claim 1 or claim 2, wherein the tank system (20) further comprises at least one crude oil based fuel tank (232, 234) that is fluidly connected to the fuel conditioning unit (112) and the control unit (40) is further configured to control the fuel conditioning unit (112), when switching between crude oil based fuel operation and alternative fuel operation, to provide as an intermediate fuel cleaning fuel to the engine fuel system (121) until the fuel recirculating unit (114) is cleaned from the fuel used prior initiating the switching, and/or
wherein the multi-fuel power plant (1) further comprises a by-pass fuel pipe (327) fluidly connecting the ethanol tank (224) and an alternative fuel conditioning section (112A) of the conditioning section (112).

4. The multi-fuel power plant (1) of claim 3, further comprising a second switch over tank (128) fluidly connected to the valve unit (126), and
wherein the control unit (40) is further configured to control the valve unit (126), during a switch over process between cleaning fuel operation and crude oil based fuel operation, to release a fuel mixture comprising cleaning fuel and crude oil based fuel from the fuel recirculating unit (114) to the second switch over tank (128).

5. The multi-fuel power plant (1) of any one of the preceding claims, further comprising:
a viscosity sensor (120) provided in the fluid connection between the circulation tank (122) and the entrance of the engine fuel system (121), and
wherein the control unit (40) is further configured to receive viscosity data of the fuel from the viscosity sensor (120) and to control the conditioning unit (121) and/or a heat exchanger (123) based on the viscosity data.

6. The multi-fuel power plant (1) of any one of the preceding claims, wherein the internal combustion engine (100) is configured to operate as a self-ignition internal combustion engine with at least one fuel selected from the group of fuels comprising crude oil based fuels such as diesel fuel, light fuel oil, and heavy fuel oil, alternative fuels such as first generation biofuels including palm oil, canola oil, oils based on animal fat and second generation biofuels including oils made of non food corps, for example, pyrolysis oil based fuels, and ethanol-based fuels such as ethanol castor oil compositions.

7. The multi-fuel power plant (1) of any one of the preceding claims, wherein the fuel recirculating unit (114) further comprises a fuel cooling unit (124), which is fluidly connected to the circulation tank (122) and fluidly connected directly or via the valve unit (126) to the exit of the engine fuel system (121), and wherein the circulation tank (122) is fluidly connected to an entrance of the engine fuel system (121), and the control unit (40) is further configured to control the cooling unit (124) in dependence of the type of fuel in the fuel recirculating unit.

8. A method for operating a multi-fuel internal combustion engine (100) configured for alternative fuel operation and cleaning fuel operation, the internal combustion engine (100) comprising a fuel recirculating cycle comprising a fuel recirculating unit (114) and an engine fuel system (121), the method comprising:
providing castor oil and ethanol as components of a cleaning fuel and mixing the components such that a cleaning fuel is provided that is chemically compatible to the alternative fuel and allows operation of the internal combustion engine (100);
operating the internal combustion engine (100) with the cleaning fuel such that the fuel recirculation unit (114) is filled essentially with the cleaning fuel;
during continuous operation of the internal combustion engine (100), switching to operating the internal combustion engine (100) with the alternative fuel by supplying the alternative fuel to the fuel recirculation unit (114), thereby increasing the ratio of alternative fuel in the engine fuel system (121).

9. The method of claim 8, further comprising, during continuous operation of the internal combustion engine (100), switching back to operating the internal combustion engine (100) with the cleaning fuel by supplying the cleaning fuel to the fuel recirculation unit (114), thereby increasing the ratio of cleaning fuel in the engine fuel system (121).

10. The method of claim 8 or claim 9, further comprising, during the switch over process between alternative fuel operation and cleaning fuel operation, releasing a fuel mix comprising cleaning fuel and alternative fuel from the fuel recirculating unit (114).

11. A method for switching between alternative fuel operation and crude oil based fuel operation of a multi-fuel internal combustion engine (100) with a fuel recirculating cycle comprising a fuel recirculating unit (114) and an engine fuel system (121), the method comprising:
operating the internal combustion engine (100) with a crude oil based fuel such that the fuel recirculating cycle is filled essentially with the crude oil based fuel;
during continuous operation of the internal combustion engine, switching to operating the internal combustion engine (110) with a switching fuel, which is chemically compatible to the crude oil based fuel as well as an alternative fuel and allows operation of the internal combustion engine (110), by supplying the cleaning fuel to the fuel recirculation cycle, thereby increasing the ratio of the switching fuel in the engine fuel system (121); and
performing the method of any one of claims 8 to 10, whereby the switching fuel is provided as the cleaning fuel.

12. The method of claim 11, further comprising, during the switch over process between crude oil based fuel operation and switching fuel operation, releasing a fuel mix comprising switching fuel and crude oil based fuel from the fuel recirculating cycle.

13. The method of claim 11 or claim 12, further comprising, when operating the internal combustion engine (110) with the switch over fuel, changing the temperature of the switching fuel in the fuel recirculating unit (114) towards a temperature used for the successively supplied fuel.

14. The method of any one of claim 8 to claim 13, wherein the cleaning fuel is an ethanol-based fuel, consisting of, based on the total volume of ethanol and castor oil, 20 to 90 % by volume ethanol and 80 to 10 % by volume castor oil, and optionally including one or more additives in a total amount of up to 3 wt.-% of the total weight of the ethanol and castor oil.

15. The method of any one of claim 8 to claim 14, wherein the internal combustion engine (110) is operated as a self-ignition internal combustion engine with at least one fuel selected from the group of fuels comprising crude oil based fuels such as diesel fuel, light fuel oil, and heavy fuel oil, alternative fuels such as first generation biofuels including palm oil, canola oil, oils based on animal fat and second generation biofuels including oils made of non food corps, for example, pyrolysis oil based fuels, and ethanol-based fuels such as ethanol castor oil compositions.

## Patentansprüche

1. Mehrkraftstoffkraftwerksanlage (1) mit
einem Tanksystem (20) mit einem Alternativ-Kraftstofftank (212), einem Rizinusöltank (222) und einem Ethanoltank (224),
einem Kraftstoffbehandlungssystem (30) mit einer Alternativ-Kraftstoffbehandlungseinheit (310), die mit dem mindestens einen Alternativ-Kraftstofftank (212) fluidverbunden und zum Behandeln des Alternativ-Kraftstoffs ausgebildet ist, und einer Reinigungskraftstoffbehandlungseinheit (320), die mit dem Rizinusöltank (222) und dem Ethanoltank (224) fluidverbunden und zum Erzeugen von Reinigungskraftstoff durch Mischen der Komponenten Rizinusöl und Ethanol ausgebildet ist,
einer Kraftstoffkonditioniereinheit (112), die mit der Alternativ-Kraftstoffbehandlungseinheit (310) und der Reinigungskraftstoffbehandlungseinheit (320) fluidverbunden ist und ein Kraftstoffauswahlventil (113) zum Auswählen, welcher Typ Kraftstoff von welchem Abschnitt der Kraftstoffkonditioniereinheit (112) zur Verbrennung bereitgestellt wird, aufweist,
einem Verbrennungsmotor (100) zum Betreiben mit dem Alternativ-Kraftstoff und dem Reinigungskraftstoff, wobei der Verbrennungsmotor (100) ein Motorkraftstoffsystem (121) aufweist,
einer Kraftstoffrezirkulationseinheit (114), die dazu ausgebildet ist, Kraftstoff von dem Kraftstoffauswahlventil (113) der Kraftstoffkonditioniereinheit (112) zu empfangen und das Motorkraftstoffsystem (121) mit Kraftstoff zu versorgen, wobei die Kraftstoffrezirkulationseinheit (114) einen Zirkulationstank (122) aufweist, der mit der Kraftstoffkonditioniereinheit (112) und dem Motorkraftstoffsystem (121) fluidverbunden ist, und
einer Steuerungseinheit (40), die dazu ausgebildet ist die Kraftstoffkonditioniereinheit (112) zum Konditionieren des zur Versorgung des Motorkraftstoffsystems (121) ausgewählten Kraftstoffs anzusteuern und denselben dem Zirkulationstank (122) bereitzustellen, wobei dadurch ein Wechseln zwischen einem Alternativ-Kraftstoffbetrieb und einem Reinigungskraftstoffbetrieb während eines kontinuierlichen Betreibens des Verbrennungsmotors (100) erlaubt wird.

2. Mehrkraftstoffkraftwerksanlage (1) nach Anspruch 1, ferner mit
einer Ventileinheit (126) an einem Ausgang des Motorkraftstoffsystems (121) und
einer ersten Wechseleinheit (116) mit einem ersten Wechseltank (128), der mit der Ventileinheit (126) fluidverbunden ist, und einer ersten Wechselpumpe (130), die mit dem ersten Wechseltank (128) und dem Alternativ-Kraftstofftank (212) und/oder der Kraftstoffkonditioniereinheit (112) fluidverbunden ist, und
wobei die Steuerungseinheit (40) ferner dazu ausgebildet ist, die Ventileinheit (126) während eines Wechselvorgangs zwischen einem Alternativ-Kraftstoffbetrieb und einem Reinigungskraftstoffbetrieb anzusteuern, um ein Kraftstoffgemisch aus Reinigungskraftstoff und Alternativ-Kraftstoff von einem Kraftstoffrezirkulationskreislauf in den ersten Wechseltank (128) abzulassen.

3. Mehrkraftstoffkraftwerksanlage (1) nach Anspruch 1 oder Anspruch 2, wobei das Tanksystem (20) ferner mindestens einen rohölbasierten Kraftstofftank (232, 234) aufweist, der mit der Kraftstoffkonditioniereinheit (112) fluidverbunden ist, und die Steuerungseinheit (40) ist ferner dazu ausgebildet, die Kraftstoffkonditioniereinheit (112) beim Wechseln zwischen rohölbasierten Kraftstoffbetrieb und Alternativ-Kraftstoffbetrieb derart anzusteuern, dass sie als Übergangskraftstoff den Reinigungskraftstoff an das Motorkraftstoffsystem (121) abgibt, bis die Kraftstoffrezirkulationseinheit (114) vom vor dem Veranlassen des Wechsels benutzten Kraftstoff gesäubert ist, und/oder
wobei die Mehrkraftstoffkraftwerksanlage (1) ferner eine By-Pass-Kraftstoffleitung (327) aufweist, die den Ethanoltank (224) und einen Alternativ-Kraftstoffkonditionierabschnitt (112A) des Konditionierabschnitts (112) fluidverbindet.

4. Mehrkraftstoffkraftwerksanlage (1) nach Anspruch 3 ferner mit
einem zweiten Wechseltank (128), der mit der Ventileinheit (126) fluidverbunden ist, und
wobei die Steuerungseinheit (40) ferner dazu ausgebildet ist, die Ventileinheit während eines Wechselprozesses zwischen Reinigungskraftstoffbetrieb und rohölbasierten Kraftstoffbetrieb zum Ablassen eines Kraftstoffgemisches aus Reinigungskraftstoff und erdölbasierten Kraftstoff von der Kraftstoffrezirkulationseinheit (114) in den zweiten Wechseltank (128) anzusteuern.

5. Mehrkraftstoffkraftwerksanlage (1) nach einem der vorhergehenden Ansprüche ferner mit
einem Viskositätssensor (120), der in der Fluidverbindung zwischen dem Zirkulationstank (122) und dem Eingang des Motorkraftstoffsystems (121) vorgesehen ist, und
wobei die Steuerungseinheit (40) ferner dazu ausgebildet ist, Viskositätsdaten des Kraftstoffs von dem Viskositätssensor (120) zu empfangen und die Konditioniereinheit (121) und/oder einen Wärmetauscher (123) basierend auf den Viskositätsdaten anzusteuern.

6. Mehrkraftstoffkraftwerksanlage (1) nach einem der vorhergehenden Ansprüche, wobei der Verbrennungsmotor (100) dazu ausgebildet ist, als selbstzündender Verbrennungsmotor mit mindestens einem Kraftstoff aus der Gruppe von Kraftstoffen umfassend rohölbasierte Kraftstoffe wie Dieselöl, Leichtöl, und Schweröl, Alternativ-Kraftstoffe wie erste-Generation-Biokraftstoffe umfassend Palmöl, Rapsöl, Öle basierend auf tierischen Fetten und zweite-Generation-Biokraftstoffe umfassend Öle hergestellt aus nicht Lebensmittel-Agrargütern z.B. pyrolyseölbasierte Kraftstoffe und ethanolbasierte Kraftstoffe wie Ethanol-Rizinusöl-Kompositionen.

7. Mehrkraftstoffkraftwerksanlage (1) nach einem der vorhergehenden Ansprüche, wobei die Kraftstoffrezirkulationseinheit (114) ferner eine Kraftstoffkühleinheit (124) aufweist, welche mit dem Zirkulationstank (122) fluidverbunden ist und direkt oder über die Ventileinheit (126) mit dem Ausgang des Motorkraftstoffsystems (121) fluidverbunden ist, und wobei der Zirkulationstank (122) mit einem Eingang des Motorkraftstoffsystems (121) fluidverbunden ist und die Steuerungseinheit (40) ferner dazu ausgebildet ist, die Kühleinheit (124) in Abhängigkeit vom Kraftstofftyp in der Kraftstoffrezirkulationseinheit anzusteuern.

8. Verfahren zum Betreiben eines Mehrkraftstoffverbrennungsmotors (100), der für einen Alternativ-Kraftstoffbetrieb und einen Reinigungskraftstoffbetrieb ausgebildet ist und einen Kraftstoffrezirkulationskreislauf mit einer Kraftstoffrezirkulationseinheit (114) und einem Motorkraftstoffsystem (121) aufweist, wobei das Verfahren die Schritte umfasst
Bereitstellen von Rizinusöl und Ethanol als Komponenten eines Reinigungskraftstoffs und Mischen der Komponenten, so dass ein Reinigungskraftstoff bereitgestellt wird, der chemisch kompatibel mit dem Alternativ-Kraftstoff ist und einen Betrieb des Verbrennungsmotors (100) erlaubt,
Betreiben des Verbrennungsmotors (100) mit dem Reinigungskraftstoff, so dass die Kraftstoffrezirkulationseinheit (114) im Wesentlichen mit dem Reinigungskraftstoff gefüllt ist,
während eines kontinuierlichen Betriebs des Verbrennungsmotors (100), Wechseln zu einem Betreiben des Verbrennungsmotors (100) mit dem Alternativ-Kraftstoff durch Versorgen der Kraftstoffrezirkulationseinheit (114) mit dem Alternativ-Kraftstoff, wobei das Verhältnis des Alternativ-Kraftstoffs in dem Motorkraftstoffsystem (121) ansteigt.

9. Verfahren nach Anspruch 8, ferner mit dem Schritt
während eines kontinuierlichen Betriebs des Verbrennungsmotors (100) Zurückwechseln zum Betreiben des Verbrennungsmotors (100) mit dem Reinigungskraftstoff durch Versorgen der Kraftstoffrezirkulationseinheit (114) mit dem Reinigungskraftstoff, wobei der Anteil des Reinigungskraftstoffs in dem Motorkraftstoffsystem (121) ansteigt.

10. Verfahren nach Anspruch 8 oder Anspruch 9 ferner mit
Ablassen eines Kraftstoffgemisches aus Reinigungskraftstoff und Alternativ-Kraftstoff von der Kraftstoffrezirkulationseinheit (114) während des Wechselvorgangs zwischen Alternativ-Kraftstoffbetrieb und Reinigungskraftstoffbetrieb.

11. Verfahren zum Wechseln zwischen einem Alternativ-Kraftstoffbetrieb und einem rohölbasierten Kraftstoffbetrieb eines Mehrkraftstoffverbrennungsmotors (100) mit einem Kraftstoffrezirkulationskreislauf mit einer Kraftstoffrezirkulationseinheit (114) und einem Motorkraftstoffsystem (121), wobei das Verfahren die Schritte aufweist
Betreiben des Verbrennungsmotors (100) mit einem rohölbasierten Kraftstoff, so dass der Kraftstoffrezirkulationskreislauf im Wesentlichen mit dem rohölbasierten Kraftstoff gefüllt ist,
während des kontinuierlichen Betriebs des Verbrennungsmotors Wechseln zum Betreiben des Verbrennungsmotors (110) mit einem Wechselkraftstoff, der chemisch mit dem rohölbasierten Kraftstoff und einem Alternativ-Kraftstoff kompatibel ist und einen Betrieb des Verbrennungsmotor (110) erlaubt, durch Versorgen des Kraftstoffrezirkulationskreislaufs mit dem Reinigungskraftstoff, wodurch der Anteil des Wechselkraftstoffs in dem Motorkraftstoffsystem (121) ansteigt, und
Durchführen der Methode nach einem der Ansprüche 8 bis 10, wobei der Wechselkraftstoff als Reinigungskraftstoff bereitgestellt wird.

12. Verfahren nach Anspruch 11, ferner mit
Ablassen eines Kraftstoffgemisches aus Wechselkraftstoff und rohölbasierten Kraftstoff von dem Kraftstoffrezirkulationskreis während des Wechselvorgangs zwischen dem rohölbasierten Kraftstoffbetrieb und dem Wechselkraftstoffbetrieb.

13. Verfahren nach Anspruch 11 oder Anspruch 12 ferner mit
Ändern der Temperatur des Wechselkraftstoffs in der Kraftstoffrezirkulationseinheit (114) beim Betreiben des Verbrennungsmotors (110) mit dem Wechselkraftstoff in Richtung einer Temperatur, die für den nachfolgend versorgten Kraftstoff benutzt wird.

14. Verfahren nach einem der Ansprüche 8 bis 13, wobei der Reinigungskraftstoff ein ethanolbasierter Kraftstoff bestehend aus, basierend auf dem Gesamtvolumen von Ethanol und Rizinusöl, 20 bis 90 Volumenprozent Ethanol und 80 bis 10 Volumenprozent Rizinusöl, und optional aufweisend ein oder mehrere Additive in einer Gesamtmenge von bis 3 Gewichtsprozent des Gesamtgewichts von Ethanol und Rizinusöl.

15. Verfahren nach einem der Ansprüche 8 bis 14, wobei der Verbrennungsmotor (110) als selbstzündender Verbrennungsmotor mit mindestens einem Kraftstoff aus der Gruppe von Kraftstoffen umfassend rohölbasierte Kraftstoffe wie Dieselkraftstoffe, Leichtöl und Schweröl, Alternativ-Kraftstoffe wie erste-Generation-Biokraftstoffe umfassend Palmöl, Rapsöl, Öle basierend auf tierischen Fetten und zweite-Generation-Biokraftstoffe umfassend Öle hergestellt aus nicht Lebensmittel-Agrargütern z.B. pyrolyseölbasierte Kraftstoffe und ethanolbasierte Kraftstoffe wie Ethanol-Rizinusöl-Kompositionen.

## Revendications

1. Groupe motopropulseur à carburants multiples (1) comprenant :
un système de réservoirs (20) comprenant un réservoir de carburant alternatif (212), un réservoir d'huile de ricin (222), et un réservoir d'éthanol (224) ;
un système de traitement de carburant (30) comprenant une unité de traitement de carburant alternatif (310) raccordée de façon fluidique à l'au moins un réservoir de carburant alternatif (212) et configurée pour traiter le carburant alternatif et une unité de traitement de carburant de nettoyage (320) raccordée de façon fluidique au réservoir d'huile de ricin (222) et au réservoir d'éthanol (224) et configurée pour produire un carburant de nettoyage en mélangeant les composants huile de ricin et éthanol de celui-ci ;
une unité de conditionnement de carburant (112) raccordée de façon fluidique à l'unité de traitement de carburant alternatif (310) et à l'unité de traitement de carburant de nettoyage (320) et comprenant une soupape de sélection de carburant (113) pour sélectionner le type de carburant, et la section de l'unité de conditionnement de carburant (112) dont celui-ci provient, qui est fourni pour la combustion ;
un moteur à combustion interne (100) pour le fonctionnement avec le carburant alternatif et le carburant de nettoyage, le moteur à combustion interne (100) comprenant un circuit de carburant de moteur (121) ;
une unité de recirculation de carburant (114) configurée pour recevoir du carburant à partir de la soupape de sélection de carburant (113) de l'unité de conditionnement de carburant (112) et pour alimenter en carburant le circuit de carburant de moteur (121), l'unité de recirculation de carburant (114) comprenant un réservoir de circulation (122), qui est raccordé de façon fluidique à l'unité de conditionnement de carburant (112) et au circuit de carburant de moteur (121) ; et
une unité de commande (40) configurée pour commander l'unité de conditionnement de carburant (112) pour conditionner le carburant sélectionné pour être fourni au circuit de carburant de moteur (121) et pour fournir celui-ci au réservoir de circulation (122), permettant ainsi la permutation entre le fonctionnement à carburant alternatif et le fonctionnement à carburant de nettoyage tout en faisant fonctionner en continu le moteur à combustion interne (100).

2. Groupe motopropulseur à carburants multiples (1) selon la revendication 1, comprenant en outre :
une unité soupape (126) à une sortie du circuit de carburant de moteur (121) ; et
une première unité de permutation (116) comprenant un premier réservoir de permutation (128) raccordé de façon fluidique à l'unité soupape (126) et une première pompe de permutation (130) raccordée de façon fluidique au premier réservoir de permutation (128) et à au moins un parmi le réservoir de carburant alternatif (212) et l'unité de conditionnement de carburant (112), et
dans lequel l'unité de commande (40) est en outre configurée pour commander l'unité soupape (126) durant un procédé de permutation entre le fonctionnement à carburant alternatif et le fonctionnement à carburant de nettoyage pour libérer un mélange de carburant comprenant du carburant de nettoyage et du carburant alternatif d'un cycle de recirculation de carburant au premier réservoir de permutation (128).

3. Groupe motopropulseur à carburants multiples (1) selon la revendication 1 ou la revendication 2, dans lequel le système de réservoirs (20) comprend en outre au moins un réservoir de carburant à base de pétrole brut (232, 234) qui est raccordé de façon fluidique à l'unité de conditionnement de carburant (112) et l'unité de commande (40) est en outre configurée pour commander l'unité de conditionnement de carburant (112), lors de la permutation entre le fonctionnement à carburant à base de pétrole brut et le fonctionnement à carburant alternatif, pour fournir, en tant que carburant intermédiaire, du carburant de nettoyage au circuit de carburant de moteur (121) jusqu'à ce que le carburant utilisé avant d'amorcer la permutation soit nettoyé de l'unité de recirculation de carburant (114), et/ou
dans lequel le groupe motopropulseur à carburants multiples (1) comprend en outre un tuyau de carburant de dérivation (327) raccordant de façon fluidique le réservoir d'éthanol (224) et une section de conditionnement de carburant alternatif (112A) de la section de conditionnement (112).

4. Groupe motopropulseur à carburants multiples (1) selon la revendication 3, comprenant en outre un second réservoir de permutation (128) raccordé de façon fluidique à l'unité soupape (126), et
dans lequel l'unité de commande (40) est en outre configurée pour commander l'unité soupape (126), durant un procédé de permutation entre le fonctionnement à carburant de nettoyage et le fonctionnement à carburant à base de pétrole brut, pour libérer un mélange de carburant comprenant du carburant de nettoyage et du carburant à base de pétrole brut de l'unité de recirculation de carburant (114) au second réservoir de permutation (128).

5. Groupe motopropulseur à carburants multiples (1) selon l'une quelconque des revendications précédentes, comprenant en outre :
un capteur de viscosité (120) prévu dans le raccordement fluidique entre le réservoir de circulation (122) et l'entrée du circuit de carburant de moteur (121), et
dans lequel l'unité de commande (40) est en outre configurée pour recevoir des données de viscosité du carburant à partir du capteur de viscosité (120) et pour commander l'unité de conditionnement (121) et/ou un échangeur de chaleur (123) en fonction des données de viscosité.

6. Groupe motopropulseur à carburants multiples (1) selon l'une quelconque des revendications précédentes, dans lequel le moteur à combustion interne (100) est configuré pour fonctionner en tant que moteur à combustion interne à auto-allumage avec au moins un carburant sélectionné parmi le groupe de carburants comprenant des carburants à base de pétrole brut, tels que du carburant diesel, du fioul léger, et du fioul lourd, des carburants alternatifs, tels que des biocarburants de première génération, y compris de l'huile de palme, de l'huile de colza, des huiles fondées sur de l'huile animale, et des biocarburants de seconde génération, y compris des huiles faites de corps non alimentaires, par exemple, des carburants à base d'huile de pyrolyse, et des carburant à base d'éthanol, tels que des compositions d'éthanol-huile de ricin.

7. Groupe motopropulseur à carburants multiples (1) selon l'une quelconque des revendications précédentes, dans lequel l'unité de recirculation de carburant (114) comprend en outre une unité de refroidissement de carburant (124), qui est raccordée de façon fluidique au réservoir de circulation (122) et raccordée de façon fluidique directement ou par l'intermédiaire de l'unité soupape (126) à la sortie du circuit de carburant de moteur (121), et dans lequel le réservoir de circulation (122) est raccordé de façon fluidique à une entrée du circuit de carburant de moteur (121), et l'unité de commande (40) est en outre configurée pour commander l'unité de refroidissement (124) en fonction du type de carburant dans l'unité de recirculation de carburant.

8. Procédé pour faire fonctionner un moteur à combustion interne à carburants multiples (100) configuré pour le fonctionnement à carburant alternatif et le fonctionnement à carburant de nettoyage, le moteur à combustion interne (100) comprenant un cycle de recirculation de carburant comprenant une unité de recirculation de carburant (114) et un circuit de carburant de moteur (121), le procédé comprenant :
la fourniture d'huile de ricin et d'éthanol, en tant que composants d'un carburant de nettoyage, et le mélange des composants de sorte qu'un carburant de nettoyage soit fourni, qui est chimiquement compatible avec le carburant alternatif et permet le fonctionnement du moteur à combustion interne (100) ;
le fonctionnement du moteur à combustion interne (100) avec le carburant de nettoyage de sorte que l'unité de recirculation de carburant (114) soit remplie essentiellement avec le carburant de nettoyage ;
durant le fonctionnement continu du moteur à combustion interne (100), la permutation au fonctionnement du moteur à combustion interne (100) avec le carburant alternatif en fournissant le carburant alternatif à l'unité de recirculation de carburant (114), augmentant ainsi le rapport de carburant alternatif dans le circuit de carburant de moteur (121).

9. Procédé selon la revendication 8, comprenant en outre, durant le fonctionnement continu du moteur à combustion interne (100), la rétro-permutation au fonctionnement du moteur à combustion interne (100) avec le carburant de nettoyage en fournissant le carburant de nettoyage à l'unité de recirculation de carburant (114), augmentant ainsi le rapport de carburant de nettoyage dans le circuit de carburant de moteur (121).

10. Procédé selon la revendication 8 ou la revendication 9, comprenant en outre, durant le procédé de permutation entre le fonctionnement à carburant alternatif et le fonctionnement à carburant de nettoyage, la libération d'un mélange de carburant comprenant du carburant de nettoyage et du carburant alternatif à partir de l'unité de recirculation de carburant (114).

11. Procédé pour permuter entre le fonctionnement à carburant alternatif et le fonctionnement à carburant à base de pétrole brut d'un moteur à combustion interne à carburants multiples (100) avec un cycle de recirculation de carburant comprenant une unité de recirculation de carburant (114) et un circuit de carburant de moteur (121), le procédé comprenant :
le fonctionnement du moteur à combustion interne (100) avec un carburant à base de pétrole brut de sorte que le cycle de recirculation de carburant soit rempli essentiellement avec le carburant à base de pétrole brut ;
durant le fonctionnement continu du moteur à combustion interne, la permutation au fonctionnement du moteur à combustion interne (110) avec un carburant de permutation, qui est chimiquement compatible avec le carburant à base de pétrole brut ainsi qu'un carburant alternatif et permet le fonctionnement du moteur à combustion interne (110), en fournissant le carburant de nettoyage au cycle de recirculation de carburant, augmentant ainsi le rapport du carburant de permutation dans le circuit de carburant de moteur (121) ; et
la réalisation du procédé selon l'une quelconque des revendications 8 à 10, moyennant quoi le carburant de permutation est fourni en tant que carburant de nettoyage.

12. Procédé selon la revendication 11, comprenant en outre, durant le procédé de permutation entre le fonctionnement à carburant à base de pétrole brut et le fonctionnement à carburant de permutation, la libération d'un mélange de carburant comprenant le carburant de permutation et le carburant à base de pétrole brut à partir du cycle de recirculation de carburant.

13. Procédé selon la revendication 11 ou la revendication 12, comprenant en outre, lors du fonctionnement du moteur à combustion interne (110) avec le carburant de permutation, le changement de la température du carburant de permutation dans l'unité de recirculation de carburant (114) vers une température utilisée pour le carburant fourni successivement.

14. Procédé selon l'une quelconque de la revendication 8 à la revendication 13, dans lequel le carburant de nettoyage est un carburant à base d'éthanol, constitué de, en fonction du volume total d'éthanol et d'huile de ricin, 20 à 90% en volume d'éthanol et 80 à 10% en volume d'huile de ricin, et comprenant facultativement un ou plusieurs additifs dans une quantité totale allant jusqu'à 3% en poids du poids total de l'éthanol et l'huile de ricin.

15. Procédé selon l'une quelconque de la revendication 8 à la revendication 14, dans lequel le moteur à combustion interne (110) est mis en fonctionnement sous forme de moteur à combustion interne à auto-allumage avec au moins un carburant sélectionné parmi le groupe de carburants comprenant des carburants à base de pétrole brut, tels que du carburant diesel, du fioul léger, et du fioul lourd, des carburants alternatifs tels que des biocarburants de première génération, y compris de l'huile de palme, de l'huile de colza, des huiles fondées sur de l'huile animale et des biocarburants de seconde génération, y compris des huiles faites de corps non alimentaires, par exemple des carburant à base d'huile de pyrolyse, et des carburants à base d'éthanol, tels que des compositions d'éthanol-huile de ricin.
